Europäisches Patentamt

European Patent Office

Office européen des brevets

(11) Publication number: **0 218 859**

**A2**

(12) # EUROPEAN PATENT APPLICATION

(21) Application number: 86111767.9

(51) Int. Cl.⁴: **G06F 13/42 , H04M 11/06**

(22) Date of filing: 26.08.86

(30) Priority: 11.10.85 US 786973

(43) Date of publication of application:
22.04.87 Bulletin 87/17

(84) Designated Contracting States:
DE FR GB IT

(71) Applicant: **International Business Machines Corporation**
**Old Orchard Road**
**Armonk, N.Y. 10504(US)**

(72) Inventor: **Einkauf, Mark Alan**
**2704 North Walker**
**Leander Texas 78641(US)**
Inventor: **Parker, Paul Edward**
**1506 Creekview**
**Round Rock Texas 78681(US)**
Inventor: **West, Lynn Parker**
**10201 Pantera Ridge**
**Austin Texas 78759(US)**
Inventor: **Wilson, John Hayden**
**2611 Bee Caves Road Apt. 145**
**Austin Texas 78746(US)**
Inventor: **Hoegh, Brent Thomas**
**12316 Knoll Ridge Drive**
**Austin Texas 78758(US)**
Inventor: **McDonald, Bradley Scott**
**11021 Jordan Lane**
**Austin Texas 78758(US)**

(74) Representative: **Bonin, Jean-Jacques**
**Compagnie IBM France Département de**
**Propriété Intellectuelle**
**F-06610 La Gaude(FR)**

(54) Signal processor communication interface.

(57) A communication interface for providing asynchronous and telephonic communications is disclosed. The interface enables software applications, which are independent of any hardware or physical addresses, to operate on the interface. In this manner, the software applications can be written independent of hardware implementation and protocol implementation. A set of configuration parameters is defined for both an asynchronous and telephonic communication function set. Additionally, a set of interrupt conditions is defined for both the asynchronous and telephonic communication function sets. These parameters and interrupt conditions control the interaction of the software applications across the interface with the system hardware. Means are provided for directing commands coming from a software application across the interface to the system hardware. Likewise, means are provided for generating interrupts and handling these interrupts from the system hardware across the interface back to an interrupt routine within the software application.

FIG. 1

## SIGNAL PROCESSOR COMMUNICATION INTERFACE

Technical Field

This invention relates to a telephony and asynchronous communication interface, and more particularly, to an interface which is independent of hardware and protocol implementations.

Background Art

At the present time, one of the most rapidly expanding technologies in information processing is that of providing communications, such as telecommunications, to information processing systems. This technology enables not only communication between separate processing units, but also enables a user at a remote location to access a processing system using available telecommunication facilities, such as telephone lines. The ability to link individual processing systems together in a network becomes especially important as the processing capability of any one given system becomes limited by memory and/or processing constraints. Such constraints might be found for example, in small processing systems, such as personal computers. Additionally, it is quite advantageous for one processing system to directly transmit data to one or more processing systems which are located remotely. Finally, the ability for a user to remotely access a processing system which is in a fixed location enables the user to, in effect, take the processing system to a remote location.

As is the case with most processing systems, software application programs must be written to interact with the hardware in the system in order to have the system function. Typically, the processing system has a software operating system which interacts with the software application programs to carry out the processing functions of the system. Normally, the software application programs must take into account the particular communications hardware implementation as well as agree on a communication protocol to use in order to successfully communicate. As a result, an application (and therefore the user) is bound to that particular hardware implementation. Consequently, application programs must be written for specific hardware implementations.

Also, an application must be written to the particular communication protocols supported by the system or application it is going to communicate with, and the particular communications hardware on which the application will run must be able to support these protocols.

U.S. Patent 4,241,398 provides an example of a computer network using a line protocol format which provides asynchronous exchange of digital signal information between processing units in a control system. Such processing units include a central processing unit and at least one remote processing unit. The protocol implemented therein describes a technique for limiting the amount of overhead signal bits required for transferring information from the central location to the remote location. The low overhead line protocol described in this patent is an attempt to overcome the significant number of dedicated overhead signal bits which are required with such known line protocols as full or half duplex, synchronous, serial, and parallel.

U.S. Patent 4,390,969 discloses an asynchronous data transmission system which describes asynchronous sequential circuits which operate analogously to the stored state method for asynchronous control circuits. The object of this approach is to enable an asynchronous circuit to communicate with similar circuits without having to use a systems clock, while at the same time providing hazard-free and race-free implementations.

U.S. Patent 4,467,445 describes a multi-protocol communication adapter circuit which provides communication between a processor and a remote terminal. The adapter circuit is connected to the processor through a data bus and a control bus and includes control circuits through which data is transmitted to a dual modem switch. From the modem switch, the data is then transferred to either an EIA interface circuit to a conventional modem or through a line to an internal modem.

Finally, U.S. Patent 4,156,796 describes a micro-processor controlled, user programmable, communications multiplex subsystem capable of transmitting and receiving over a plurality of communication lines simultaneously. Each of the communication lines may be dynamically assigned a variety of communication characteristics including synchronous or asynchronous operation, as well as code structures and protocol selections. The system enables a user to write communication programs which provide code structure and protocol independence as well as communication line independence. The invention described herein is directed to the concept of programmably controlling data transmission over communication lines having different priorities, line speeds, code structures, electrical interfaces and control protocols. However, neither this patent nor any of the others previously described discloses how to interface a variety of application software across a programming interface with fixed hardware that is independent of both the actual hardware and the protocol employed. It would be most desirable to provide an interface which enables asynchronous communications using a modem as well as telephonic communications using standard telecommunication facilities. Regarding the latter, it would be desirable to enable a user to control timings so as to control telephone dialing according to the particular phone system in which the interface is employed.

Disclosure of the Invention

Accordingly, it is an object of this invention to provide an improved interface for asynchronous and telephonic communications.

It is another object of this invention to provide an application programming interface which is independent of hardware and protocol implementation.

In accordance with these and other objects of the invention, an interface is disclosed which enables software applications to be written to interact with hardware across the interface without hardware and protocol constraints. The interface allows application programs to be written which are independent of both the particular hardware implementation and the protocol implementation. To this end, a set of configuration parameters is defined for each of asynchronous and telephonic communications. Additionally, a set of interrupt conditions is defined for each of the asynchronous and telephonic communication functions. These configuration parameters and interrupt conditions control the interaction of application software across the interface with the hardware of the system. Means are provided for directing commands coming from an application program across the interface to the system hardware. Likewise, means are provided for generating interrupts and handling these interrupts from the system hardware across the interface and back to an interrupt routine within the application program. In the preferred embodiment disclosed herein, the application programming interface interacts directly with a host processing system. Commands and interrupts pass to and from the host processing system to the system hardware which provides the asynchronous and telephonic communication functions. The system hardware includes a programmable signal processor, a data memory, an instruction memory, and an analog subsystem which is connected directly to standard telecommunication facilities.

Brief Description of the Drawing

Fig. 1 is a functional block diagram of the system showing the hardware implementation of the preferred embodiment.

Fig. 2 is a simplified functional block diagram of the flow of commands and interrupts to and from the application program across both the programming interface and the hardware interface.

Fig. 3 is a simplified block diagram demonstrating the flow of commands from an application program across the programming interface through the host processing system to the coprocessing system hardware.

Fig. 4 is simplified block diagram demonstrating the flow of interrupts from the system hardware through the host processing system back to the application program. Best Mode for Carrying Out the Invention

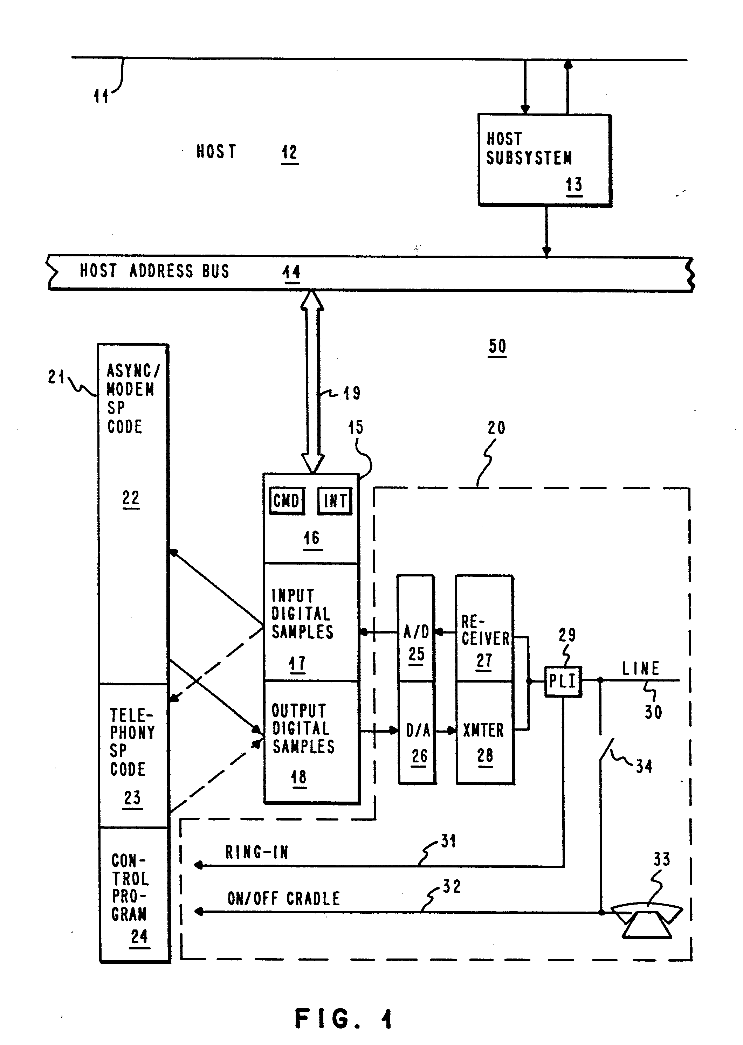

A portion of the hardware implementation of the present invention is shown in Fig. 1 along with its attachment to the host processing system 12. The application programming interface 11 is the interface across which any application software programs interact with host 12. Host subsystem 13 contains the host software that supports the hardware implementation. Access from host 12 to the hardware implementation is across host address bus 14. Bus 19 provides flow of information to and from host bus 14 and data memory 15. Data memory 15 comprises a first portion 16 for storing commands and interrupts; a second portion 17 for storing digital samples input to the system; and, a third portion 18 for storing output digital samples which will be output from the system. In addition to a data memory, the system includes an instruction memory 21 which has three separate portions. The instruction code to perform the asynchronous and modem communications is stored in partition 22. The instruction code to perform the telephony functions are stored in partition 23. Finally, a control program resides in partition 24. This control program manages the instruction memory 21 and its partitions, enabling portions of the code in partition 22 and 23 to run concurrently. The control program stored in partition 24 also controls the sharing of resources of data memory 15, as well as A/D convertor 25 and D/A convertor 26.

A portion of the analog subsystem is shown in block 20 which represents a portion of a programmable signal processor, such as the Texas Instruments TMS 32010. Analog signals are input on line 30 to phone line interface 29. Line 30 is typically a telephone line. A ring-in signal is generated on line 31 which is input to the control program stored in partition 24. The status of telephone 33 is provided to control program 24 over line 32. When telephone 33 goes off cradle, i.e., the phone is prepared for dialing, relay 34 closes enabling an outgoing call to be placed. Incoming telephone line signals are received in receiver 27 and converted to digital in A/D convertor 25. The digital samples are then stored in partition 17 of memory 15. Similarly, output digital samples are stored in partition 18 from where they may be converted to analog by D/A convertor 26 and then transmitted over line 30 by transmitter 28. Analog subsystem 20 does not form a major part of the present invention and will not be discussed further hereinafter.

At this juncture, the commands and interrupts comprising interface 11 will now be described in more detail. The interface consists of two function sets; one for telephony and one for asynchronous and modem communications. The asynchronous communications and modem function set will be described first. There are eleven asynchronous and modem communication commands which serve to define the interface including three configuration commands.

The three configuration commands are three functions of the asynchronous communications function set that operate on the data structure used the configure the facility. There are nine elements of this data structure, and they are as follows: the MODE element is a 16 bit integer indicating whether or not the asynchronous communication function of hardware system 50 is in an answer mode or an originate mode; a RATE element which indicates the bit rate of data input and output from hardware system 50; the LENGTH element which indicates the length of a byte of data; the PARITY element which is a 16 bit integer indicating whether or not the parity is none, odd, even, mark, or space (mark parity implies that the parity is always 1, while space parity implies that the parity is always 0); a STOP element is a 16 bit integer indicating the number of stop bits either 1 or 2 with 1 being the default value; the BREAK element is a 16 bit integer providing the length of time in hundreds of milliseconds that a break signal should persist on a telecommunications line; the DETECT element is a 16 bit integer that indicates the time in seconds that a modem will attempt to detect a carrier signal during a start command before reporting a failure to establish communication; the LOSS element is a 16 bit integer which indicates the time in tenths of a second that a modem will continue to attempt the carrier signal detection after loss of the carrier before reporting that the link status has changed to a down state; and, the PRESENT element is a 16 bit integer that indicates the time in tens of a second that a carrier signal must be present during a start command before it can be recognized as a carrier. The RATE, LENGTH, PARITY and STOP elements are collectively referred to as the asynchronous elements.

A default configuration (DCONFIG) command is used to re-establish the default configuration values for the function set. A function set comprises two software files, one file for the host 12 and a second file for the hardware system 50. Upon the issuance of a separate command, a function set is activated thereby causing both files to be loaded into the memory of host 12 and then for the hardware system 50 code to be downloaded into instruction RAM 21. The default configuration values are set to those values that applied when the function set was first loaded. The point at which the new configuration values become effective depends on the particular function set. For the asynchronous function set, this occurs during the START command which will be described hereinafter.

A read configuration (RCONFIG) command reads the current configuration values of a loaded function set. The current configuration values of the specified function set are stored into the data structure addressed by the configuration parameter. A change configuration (CCONFIG) command changes the current configuration values of a loaded function set. The current configuration values of the specified function set are changed to those contained in the data structure addressed by this parameter. The point in time at which the new configuration values become effective depends on the particular function set, however, only those values in the configuration parameter that are different from the current configuration are actually changed.

A subset of three commands is used to control interrupts across interface 11. An establish interrupt handler (ESTINT) command is used to identify an application software routine as the handler of specified function set interrupts. Only one interrupt handler can be established for each type of interrupt with a subsequent ESTINT simply replacing the one currently established. A mask interrupt - (MASKINT) command is used to enable or disable interrupt conditions associated with a loaded function set. A READSTAT command is used to read the status of a loaded function set and can also be used to poll when no interrupt service routine is established.

A subset of five commands is used to control communication across interface 11 and into and out of system 50. A START command is used to initiate the exchange of carrier signals into and out of system 50 according to the specific modem standard. This command is also used to change asynchronous parameters during a transmission period. A STOP command is used to stop the exchange of carrier signals to and from system 50. A RECEIVE command is used to command system 50 to give the next available the byte of data to application 10. Likewise, a SEND command is used to command that one byte of data be sent from the application 10 to system 50 and then out over line 30. Finally, a BREAK command is used to send a break signal from system 50 out over line 30.

There are five interrupt conditions which serve to define the asynchronous and modem communication interface and which are sent from system 50 across host 12 to application 10. These five conditions are LINE ERROR, DATA READY, TRANSMIT READY, BREAK SIGNAL DETECTED, and LINK STATUS CHANGE. The LINE ERROR interrupt condition will occur whenever any combination of the following three conditions occurs: There is an overrun, i.e, the software application did not issue a RECEIVE command before the next data byte to be sent to application 10 was deserialized; there was a parity error; or, there was a framing error, i.e., the data byte just serialized was not followed by the proper number of stop bits and was not placed in a register which holds RECEIVE commands. The DATA READY interrupt occurs when a byte of data has been deserialized, placed in the RECEIVE register, and is ready to be received by a software application. The TRANSMIT READY interrupt occurs when a data byte has been taken from a transmit register and the application is free to send another byte of data. A break signal interrupt occurs when a continuous stream of zero-bits is deserialized. Finally, a link status interrupt condition occurs when either an incoming signal cannot be detected, or the results of a START command are being reported, or the results of a STOP command are being reported.

The telephony function set of interface 11 includes the default, read, and change configuration commands as well as the establish interrupt and mask interrupt and read status commands that were employed in the asynchronous and modem communication description. The configuration parameters for telephony include the type of dialing to be performed (pulse or DTMF), the on and off periods for DTMF tones, the interval between digits in pulse dialing, and the duration of a taphook. Additionally, a set of telephone line control commands is used in order to control signalling over telephone line 30. An OFFHOOK command is used to indicate that a specified line is placed offhook. An. ONHOOK command is used to place a telephone line onhook. A TAPHOOK command enables a line to go onhook for a controlled period of time in order to signal a public branch exchange. A DIAL command is used to place a string of digits on a telephone line. A READCALL command is used to monitor telephone signals during the process of placing a telephone call.

A dial progress interrupt condition is generated after every significant character in a dial string has been processed. A dial complete interrupt condition is generated after the last significant character has been processed for a particular dial function. A read call progress complete interrupt condition is generated when the read call progress function is completed. A ring-in interrupt is generated whenever an incoming telephone call is received, and it identifies the line being used. An on/off cradle interrupt is generated whenever the handset of the connected telephone instrument is placed on, or taken off the cradle. These five interrupt conditions comprise the interrupts for the telephony interface.

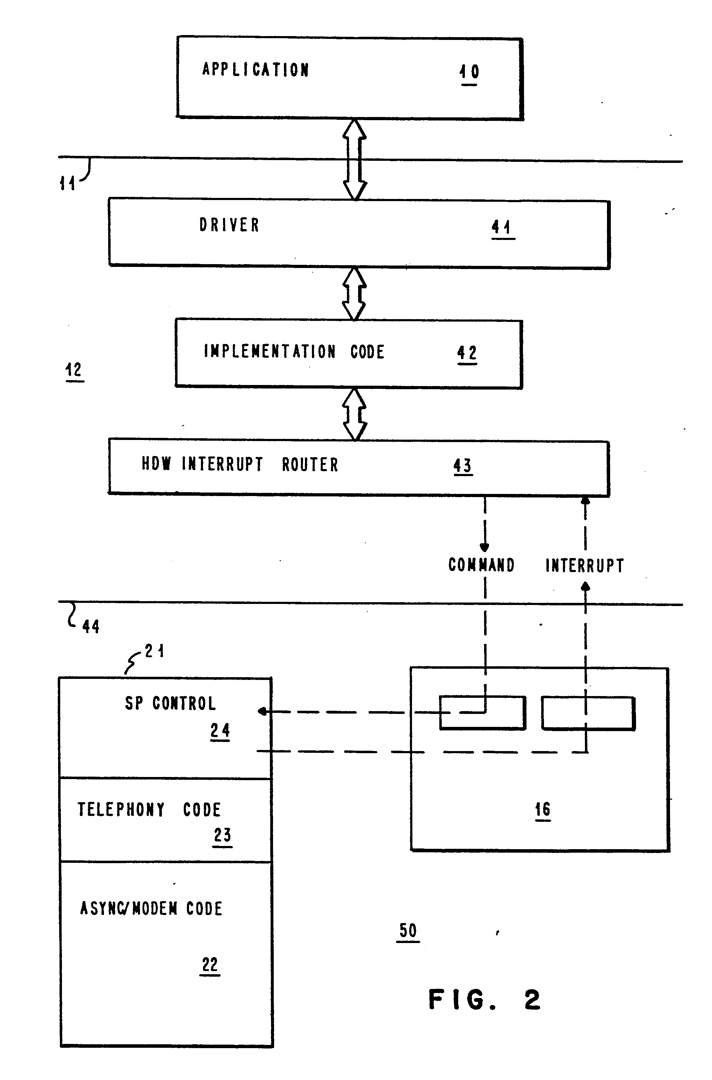

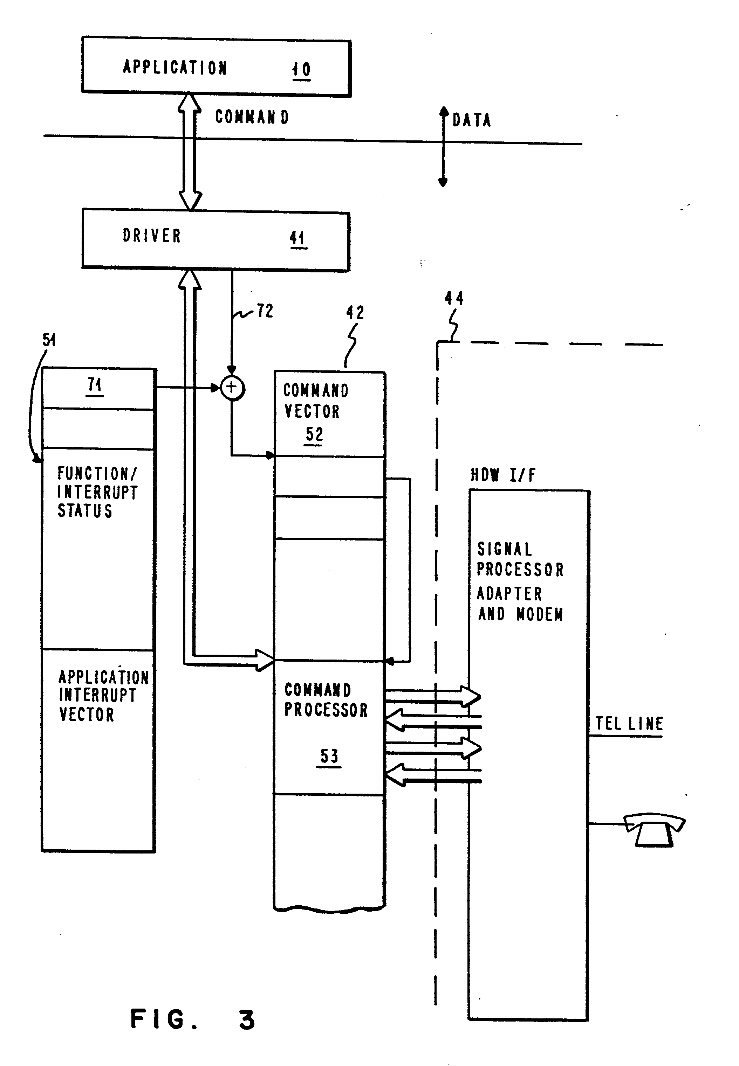

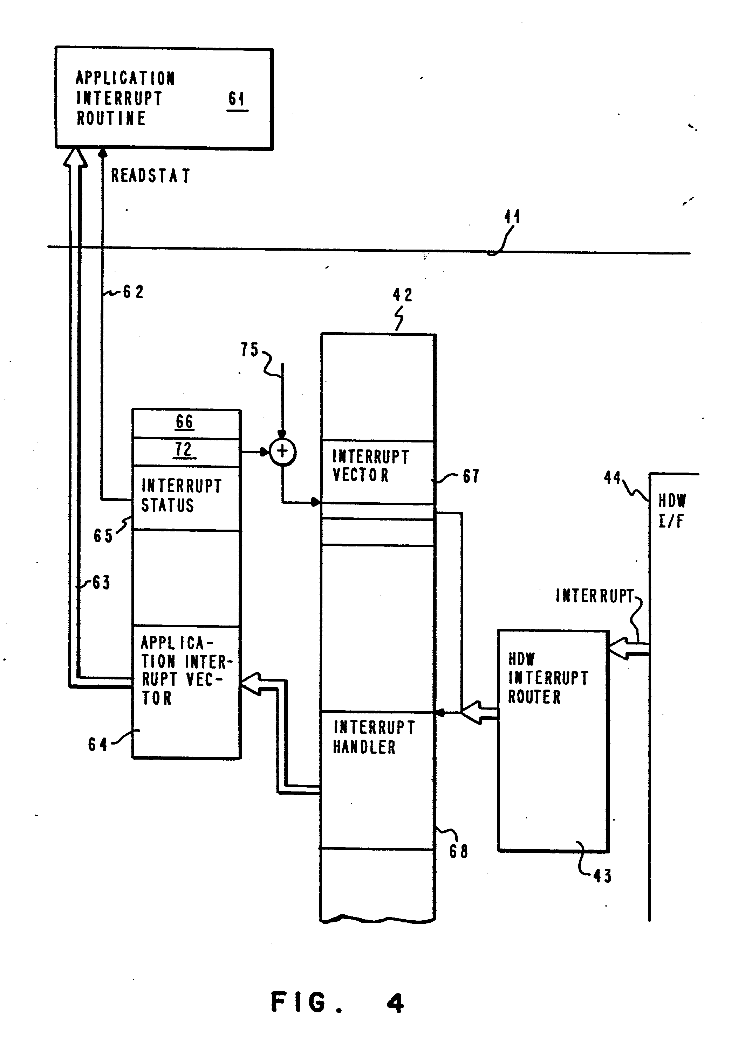

Fig. 2 shows in simplified functional block form the flow of commands and interrupts. Application 10 interacts across programming interface 11 with driver 41, implementation code 42 and hardware interrupt router 43, each of which are located in Host 12. Hardware interface 44 forms the boundary between host 12 and hardware system 50. Application commands terminate in partition 24 of instruction memory 21, while interrupts originate in partition 24. The flow of commands and interrupts which define programming interface 11 will now be explained in more detail with reference to Figs. 3 and 4. Fig. 3 details the flow of commands from application 10 across interface 11 through host 12 and to hardware system 50. The commands which are input from application 10 to interface 11 contain two types of identification. The first type of identification provided is whether or not the command is an asynchronous or telephonic command. The second type of identification is the particular command within the given function set, and this selects the appropriate point in control block 51 which points to the correct position in implementation code 42. The driver takes these commands and then passes them on to the appropriate locations in implementation code 42.

The select control block information which is part of the command input to interface 11 and driver 41 identifies a particular starting location in control block 51. This starting location is partition 71 which points to the beginning of command vector block 52. The command code information contained in the command is output over line 72. Together with the pointer information from partition 71, the command code points or indexes to the particular location in command vector 52 to which this command is pertinent. After execution, command vector 52 points to a specific piece of implementation code in command processor 53. Having found the particular piece of code required, driver 41 then points to the particular entry point in command processor 53 which contains this required code. In effect, command vector 52 along with the command code issued over line 72 and partition 71 perform an addressing function. Command processor 53 then implements the particular command which has been output from application 10 to hardware system 50.

Fig. 4 provides in more detail the flow of interrupts from hardware system 50 back through host 12 to interface 11 and then to application interrupt routine 61 within application 10. An interrupt is generated by hardware system 50 and output across hardware interface 44 to hardware interrupt router 43 over line 73. The interrupt contains both partition information and information as to the type of interrupt. The partition information points to location in control block 51. In this case, the partition information points to partition 72 which is the starting point of interrupt vector 67. The type of interrupt is input over line 75. Together with the information from partition 72, the correct starting point in interrupt vector block 67 is accessed. After execution, interrupt vector 67 points to the entry point in interrupt handler 68. Hardware interrupt router 43 then routes the interrupt to the appropriate function set in interrupt handler 68. Interrupt handler 68 then executes and passes the interrupt up to application interrupt routine 61 through application interrupt vector 64. The information provided on line 63 to application interrupt routine 61 contains information as to which interrupt is coming and gives application 10 control to process the interrupt. After control has been given to application 10, a read status command (READSTAT) is output from application 10. The read status information is then input over line 62 from interrupt status block 65 to application interrupt routine 61. This signal provides more information regarding the interrupt which has just been sent and also informs the application interrupt routine 61 if other interrupts have occurred (for which there was no interrupt handler established) since the last READSTAT. The interrupt status block 65 is updated by interrupt handler 68 each time interrupt handler 68 is accessed by hardware interrupt router 43.

While the invention has been particularly shown and described with reference to a preferred embodiment therein, it will be understood by those skilled in the art that various changes in form and detail may be made without departing from the spirit and scope of the invention.

## Claims

1. A signal processing communication system for providing telephonic and asynchronous communications, comprising:

a plurality of hardware resources for providing telephonic and asynchronous communications;

at least one application program for interacting with at least one of said plurality of hardware resources, thereby providing one of telephonic and asynchronous communications; and,

means for interfacing said at least one application program with said at least one of said plurality of hardware resources, said means being independent of any hardware or protocol implementation.

2. A signal processing communication system according to Claim 1 wherein said means comprises a first set of commands and interrupts

for controlling asynchronous communications and a second set

of commands and interrupts for controlling telephonic communications.

3. A signal processing communication system according to Claim 2 wherein said first set of commands comprises a set of configuration commands, said configuration commands controlling mode of operation, data rate and length, and parity in

said system.

4. A signal processing communication

system according to Claim 2 wherein said first set of commands comprises a set of interrupt control commands for controlling interrupts in said system.

5. A signal processing control system according to Claim 2 wherein said first set of commands comprises a set of communication control commands for controlling communication in said system.

6. A signal processing communication system according to Claim 2 wherein said second set of commands comprises a set of configuration commands,

said configuration commands controlling mode of operation, type of dialing, specification of dial tones and intervals, and duration of generated taphook in said system.

7. A signal processing communication system according to Claim 2 wherein said second set of commands comprises a set of interrupt control commands for controlling interrupts in said system.

8. A signal processing communication system according to Claim 2 wherein said second set of commands comprises a set of telephone line control commands for controlling signalling over a telephone line.

9. A signal processing communication system according to Claim 8 wherein said set of telephone line control commands comprises,

means for placing a line onhook and offhook, means for dialing a string of digits, and, means for monitoring telephone signals on said telephone line.

FIG. 4

APPLICATION       <u>10</u>

11

DRIVER       <u>41</u>

IMPLEMENTATION CODE       <u>42</u>

<u>12</u>

HDW INTERRUPT ROUTER       <u>43</u>

COMMAND       INTERRUPT

44

<u>21</u>

SP CONTROL

<u>24</u>

TELEPHONY CODE

<u>23</u>

ASYNC/MODEM CODE

<u>22</u>

<u>16</u>

<u>50</u>

F I G. 2

FIG. 3

FIG. 4